(19) Europäisches Patentamt
European Patent Office
Office européen des brevets

(11) **EP 3 266 643 A1**

(12) **EUROPEAN PATENT APPLICATION**

(43) Date of publication:
**10.01.2018 Bulletin 2018/02**

(51) Int Cl.:
***B60L 7/22*** (2006.01)  ***B60L 11/18*** (2006.01)

(21) Application number: **16178247.9**

(22) Date of filing: **06.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Volvo Car Corporation
40 531 Göteborg (SE)**

(72) Inventors:
• **Johansson, Lars
Suzhou, SIP / 215021 (CN)**
• **Klang, Karl
41653 Göteborg (SE)**
• **Thiringer, Torbjörn
41679 Göteborg (SE)**

(74) Representative: **Volvo Car Corporation
405 31 Göteborg (SE)**

(54) **POWER DISSIPATING TORQUE CONTROLLER**

(57) There is provided a method and a system for controlling power dissipation in an electric drive system for a hybrid electrical vehicle comprising determining the stator current of an electrical machine providing a maximum achievable power dissipation in the electrical drive system and determining a maximum available braking torque of an electrical machine.

EP 3 266 643 A1

Fig. 1

**Description**

Field of the Invention

The present invention relates to a control system for a hybrid electrical vehicle. In particular, the present invention relates to a system and a method for dissipating power in an electrical drive system of a hybrid electrical vehicle.

Background of the Invention

A powertrain unit for a hybrid electrical vehicle typically comprises an electrical machine connected to a shaft of the transmission system, such that the power train can be used in pure electric propulsion mode, or in hybrid mode where also the internal combustion engine (ICE) is running and contributing to the propulsion.

The propulsion system of a hybrid vehicle also comprises a rechargeable battery for providing power to the electrical drive system. The battery may also be charged by the electrical drive system, for example during regenerative braking of the vehicle.

However, the battery is not always capable of receiving all of the power generated by the electrical machine. For example, if the battery is at or near full capacity, or if the battery temperature is very low, the battery may only be capable of receiving a small amount of power. Accordingly, during some operating conditions excess power generated by the electrical machine cannot be delivered to the battery.

US8880259 discloses a motor control apparatus and a method of operating an electric motor in a hybrid vehicle. In particular, US8880259 relates to providing a brake torque in the electrical motor for achieving coast down regenerative braking. In the described motor control apparatus, a motor control unit is configured to select between a normal operation mode and a power dissipation mode based on a state of the battery. During power dissipation motor control operation, power from the brake torque is dissipated in the stator windings of the electric motor without generating any power to the battery.

However, the motor control unit of US8880259 only addresses two distinct operating modes, normal operation and full power dissipation. Accordingly, an improved system and method which is capable of accommodating a range of different use cases in a hybrid vehicle is desirable.

Summary

In view of above-mentioned and other drawbacks of the prior art, it is an object of the present invention to provide an improved method and system for controlling power dissipation in a hybrid electrical vehicle.

According to a first aspect of the invention, there is provided a method for controlling power dissipation in an electric drive system for a hybrid electrical vehicle, the control system comprising: a gear set or a gear box; an electrical machine connected to an axle of the gear se or gear box; a rechargeable battery operatively connected to the electrical machine; and a control unit configured to control the gear box and the electrical machine; wherein the method comprises the steps of: determining a maximum available braking torque of the electrical machine for a given set of operating conditions based on: a maximum power that the battery can receive; and total normal power losses in the electric drive system; determining the stator current providing the maximum achievable power dissipation in the electrical drive system for a certain shaft torque value; receiving a requested braking torque for the electrical machine, lower than or equal to the maximum available braking torque, or receiving a requested power dissipation lower than or equal to the maximum achievable power dissipation; if a requested braking torque is equal to or lower than the torque required for providing a power corresponding to the sum of the maximum power that the battery can receive and the total power losses, provide the requested braking torque by providing power to the battery corresponding to the difference between the requested braking torque and the total normal power losses; and if the requested braking torque exceeds the torque required for providing a power corresponding to the sum of the maximum power that the battery can receive and the total normal power losses, determine a stator current of the electrical machine that will dissipate this additional power, while achieving the required braking torque; and if a power dissipation is requested, determine a stator current resulting in the requested power dissipation.

The present invention relates to an electric drive system for a hybrid vehicle where a rechargeable battery is operatively connected to an electrical machine configured to contribute to the propulsion of the vehicle. That the battery is operatively connected to the electrical machine means that the battery may provide power to the electrical machine for generating torque, and that the electrical machine may generate power which is subsequently provided to the battery for charging the battery.

Even though the control unit is described herein as one unit, the skilled person realizes that a control unit may comprise a plurality of processing units, such as microcontrollers, ASICs, microprocessors and the like. In a vehicle application, the control functionality may be distributed over several control units.

It is here assumed that the determined maximum available braking torque value is provided to the control functionality of the vehicle responsible for requesting a braking torque or power dissipation from the electric drive system, such that the requested braking torque or power dissipation does not exceed the maximum values.

When the stator current is determined such that the electrical machine operates at the maximum efficiency, where the stator current is determined as the maximum torque per ampere (MTPA) current with coherent voltage limitation, the available braking torque and/or the possible power dissipation capacity of the electric drive system is limited by the system losses and the power that the battery can receive.

Accordingly, the present invention is based on the realization that the range of available braking torque or power dissipation values may be extended by determining a stator current for the electrical machine which induces additional losses, i.e. a stator current for which the electrical machine does not operate at its maximum efficiency. Thereby, a greater flexibility in the use of the electric drive system is achieved, as will be further illustrated by examples described in the following.

The available ranges of both the braking torque and the power dissipation can be extended by recalculating the stator current to allow for extra power losses in the electrical machine and in the converter, compared to the above described situation where the available braking torque is limited by the system power losses and the maximum power that the battery can receive.

The total normal power losses can be considered to include all losses in the electrical drive system during normal operation of the drive system, such as, but not limited to, normal inverter and electrical machine losses and resistive losses. Accordingly, the maximum achievable power dissipation is a combination of the normal power losses and the additional losses resulting from a modification of the stator current of the electrical machine.

According to one embodiment of the invention, determining the stator current vector providing the maximum achievable power dissipation in the electrical drive system may comprise determining electrical machine losses and inverter losses for a given stator current. It should be noted that the inverter losses changes as a function of the stator losses, and that to achieve a correct result, the inverter losses for the modified stator current should be included in the determined maximum achievable power dissipation.

According to one embodiment of the invention, determining a stator current of the electrical machine that will dissipate the additional power needed while achieving the required braking torque may comprise modifying a maximum torque per ampere, MTPA, current.

The requested torque can be realized with different current vectors along a constant torque line in the current coordinate system. By deviating from the MTPA line, the same torque can be realized with another current vector, and this is how the power dissipation is realized in the motor windings. The maximum amount of power dissipation is limited by the maximum allowed current in the electrical machine, the maximum possible voltage and by thermal and magnetic limitations.

According to one embodiment of the invention, the method may further comprise determining a plurality of maximum available braking torques of the electrical machine for a range of different operating conditions, and storing the plurality of braking torques. By having access to a stored range of different braking torques for different operating conditions, it is not needed to calculate the available torque for a given operating condition which in turn makes it possible to continuously have access to a correct value of the available braking torque. The different braking torques can for example be stored in a database in an appropriate format.

According to one embodiment of the invention, the operating conditions may comprise stator winding temperature, DC voltage to the inverter, speed of the electrical machine and/or output torque from the electrical machine. All of the described operating conditions influence the maximum available braking torque of the electrical machine. For example, the stator winding temperature influences the winding resistance which in turn influences the relation between winding current and power loss in the windings.

According to one embodiment of the invention, the total normal power losses in the electric drive system comprise losses from the electrical machine and from power consuming units of the vehicle. The electrical drive system losses may for example comprise inverter losses, i.e. switching and conduction losses in power electronic transistors, resistive electrical machine stator losses, i. e. copper losses, and core and drag losses of the electrical machine, i.e. iron losses and mechanical drag losses. The power consuming unit may for example be an air conditioning system. The normal power losses may also comprise dc-dc converter losses. Moreover, in cases where the desired power dissipation exceeds the maximum available power dissipation, it is possible to utilize controllable additional loads for dissipating the additional power.

According to one embodiment of the invention, the requested braking torque may be utilized to perform gear synchronization. An advantage of knowing the available torque is that a simpler rpm regulator can be used without the need for windup compensation or the handling of residual errors which could result from an unrealized requested torque. This in turn leads to a simplified calibration and verification in the overall control system. Moreover, the simplified rpm regulation may also lead to increased communication rates in a distributed control system.

In particular, in one embodiment of the invention the requested braking torque is a torque required to reduce the speed of the axle of the gear box in order to facilitate a shift to a higher gear.

According to one embodiment of the invention, the requested braking torque may be utilized to increase a torque window for performing electrical braking of the vehicle. This has the advantage that the maximum available amount of electrical braking can be increased by utilizing the available braking torque of the electrical machine.

According to one embodiment of the invention, the requested power dissipation may be used to selectively control additional heating in the electrical machine and/or in the inverter, which in turn can be used to reduce the viscosity of coolant media which may be desirable at very low temperatures.

According to a second aspect of the invention, there is provided a control system for controlling power dissipation in an electric drive system for a hybrid electrical vehicle comprising: a gear set or a gear box; an electrical machine connected to an axle of the gear se or gear box; and rechargeable battery operatively connected to the electrical machine via an inverter, the control system comprising a control unit configured to control the gear box and the electrical machine; wherein the control unit is configured to: determine a maximum available braking torque of the electrical machine for a given set of operating conditions based on: a maximum power that the battery can receive; and total normal power losses in the electric drive system; determine the stator current providing the maximum achievable power dissipation in the electrical drive system for a certain shaft torque value; receive a requested braking torque for the electrical machine, lower than or equal to the maximum available braking torque, or receiving a requested power dissipation lower than or equal to the maximum achievable power dissipation; if a requested braking torque is equal to or lower than the torque required for providing a power corresponding to the sum of the maximum power that the battery can receive and the total power losses, provide the requested braking torque by providing power to the battery corresponding to the difference between the requested braking torque and the total normal power losses; and if the required braking torque exceeds the torque required for providing a power corresponding to the sum of the maximum power that the battery can receive and the total normal power losses, determine a stator current of the electrical machine that will dissipate the additional power needed while still achieving the required braking torque; and if a power dissipation is requested, determine a stator current resulting in the requested power dissipation.

According to one embodiment of the invention, the gear box may be a dual clutch transmission gear box, wherein the electrical machine is operatively connected to an axle of one of the two clutches, and where the other axle is connected to the internal combustion engine (ICE). Thereby, the gear box can be operated in pure electric propulsion mode, in hybrid mode or in ICE mode, by controlling the dual clutches. This in turn allows the electrical machine to be utilized for different purposes in the different modes.

Effects and features of the second aspect of the invention are largely analogous to those described above in connection with the first aspect of the invention.

There is also provided a method for controlling power dissipation in an electric drive system for a hybrid electrical vehicle, the control system comprising: a gear set or a gear box; an electrical machine connected to an axle of the gear set or gear box; a rechargeable battery operatively connected to the electrical machine; and a control unit configured to control the gear box and the electrical machine; wherein the method comprises the steps of: determining a maximum available braking torque of the electrical machine for a given set of operating conditions based on: a maximum power that the battery can receive; and total normal power losses in the electric drive system; receiving a requested braking torque for the electrical machine, lower than or equal to the maximum available braking torque, and if the requested braking torque is equal to or lower than the torque required for providing a power corresponding to the sum of the maximum power that the battery can receive and the total power losses, providing the requested braking torque by providing power to the battery corresponding to the difference between the requested braking torque and the total normal power losses; and if the requested braking torque exceeds the torque required for providing a power corresponding to the sum of the maximum power that the battery can receive and the total normal power losses, determining a stator current of the electrical machine that will dissipate the additional power needed while achieving the required braking torque.

There is also provided a method for controlling power dissipation in an electric drive system for a hybrid electrical vehicle, the control system comprising: gear set or a gear box; an electrical machine connected to an axle of the gear set or gear box; a rechargeable battery operatively connected to the electrical machine; and a control unit configured to control the gear box and the electrical machine; wherein the method comprises the steps of: determining the stator current providing a maximum achievable power dissipation in the electrical drive system for a certain shaft torque value; receiving a requested power dissipation lower than or equal to the sum of the maximum achievable power dissipation in the electrical drive system and the total normal power losses; and determining a stator current corresponding to the difference between the requested power dissipation and the total normal power losses.

Further features of, and advantages with, the present invention will become apparent when studying the appended claims and the following description. The skilled person realize that different features of the present invention may be combined to create embodiments other than those described in the following, without departing from the scope of the present invention.

Brief Description of the Drawings

These and other aspects of the present invention will now be described in more detail, with reference to the appended drawings showing an example embodiment of the invention, wherein:

Fig. 1 is a flow chart outlining the general steps of a method according to an embodiment of the invention;

Fig. 2 schematically illustrates an electric drive system for a hybrid electric vehicle according to an embodiment of the invention; and

Fig. 3 is a graph schematically illustrating stator current for an electrical machine according to embodiments of the invention.

Detailed Description of Example Embodiments

In the present detailed description, various embodiments of the method and system according to the present invention are mainly described with reference to an electric drive system for a hybrid vehicle comprising a dual clutch transmission. However, the general concept of the invention is equally applicable to hybrid drive systems utilizing other transmission configurations.

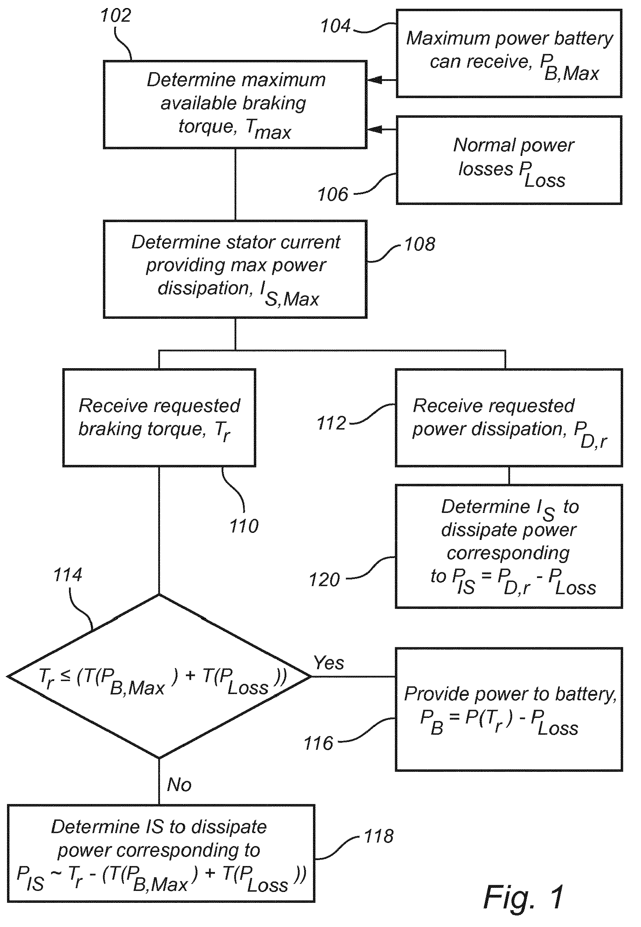

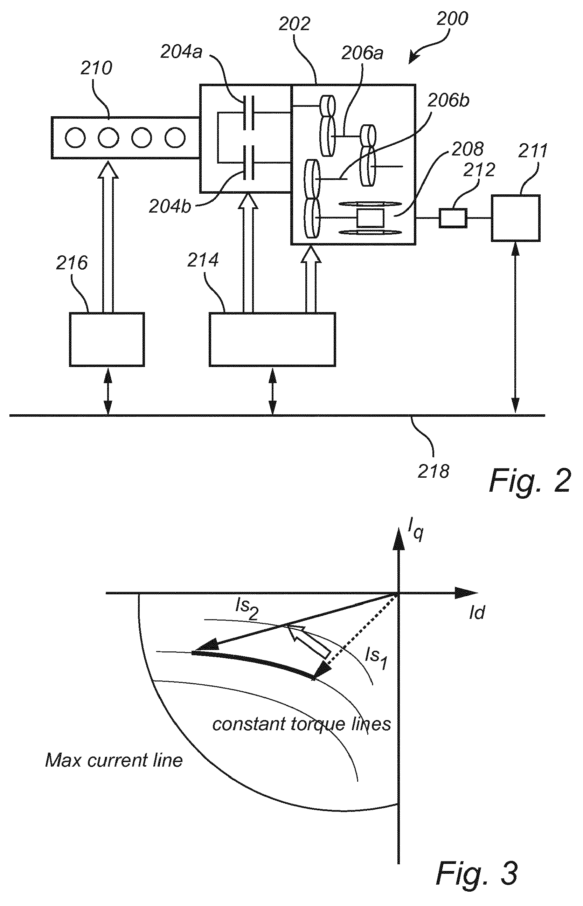

Fig. 1 is a flow chart outlining the general steps of a method according to an embodiment of the invention. The method of Fig. 1 will be discussed with further reference to Fig. 2 schematically illustrating an electric drive system for a hybrid electric vehicle.

Fig. 2 illustrates an electric drive system 200 comprising a gear set or a gear box 202. The gear box 202 is here illustrated as a dual-clutch transmission gear box 202, comprising a first and a second clutch, 204a, 204b connected to a respective first and second axle, 206a, 206b. An electrical machine 208 is operatively connected to the second axle 206b of the gear box 202, which in the present example can be considered to represent the even gears of the gear box 202. The gear box 202 is further arranged to receive power from an internal combustion engine (ICE) 210. A rechargeable battery 211 is operatively connected to the electrical machine 208 via an inverter and inverter controller unit 212.

The system further comprises a control unit 214 configured to control the gear box 202 and the electrical machine 208 and an engine control module (ECM) 216 controls the operation of the ICE 210. The various control units and modules are connected to a common communication interface, e.g. a CAN bus, for communicating with each other and with other modules in the vehicle in which the drive system is arranged. However, the skilled person realizes that the described functionality can be achieved in many different ways by using one or more dedicated or general purpose control units.

The method outlined in Fig. 1 comprises determining 102 a maximum available braking torque $T_{Max}$ of the electrical machine 208 for a given set of operating conditions based on a maximum power $P_{B,Max}$ 104 that the battery 210 can receive and the total normal power losses $P_{Loss}$ 106 in the electric drive system 200. Next, the stator current, $I_{S,Max}$, providing the maximum achievable power dissipation $P_{D,Max}$ in the electrical drive system for a certain shaft torque value is determined 108.

The maximum available braking torque $T_{Max}$ is thus determined as the sum of the torque required to provide the maximum power to the battery, the normal power losses and the maximum achievable power dissipation, i.e. $T_{Max} \sim (P_{B,Max} + P_{Loss} + P_{D,Max})$.

Next, the method comprises receiving 110 a requested braking torque $T_r$ for the electrical machine, lower than or equal to the maximum available braking torque $T_{Max}$, or receiving 112 a requested power dissipation $P_{D,r}$ lower than or equal to the sum of the maximum achievable power dissipation in the electrical drive system, $P_{D,EM}$, and the total normal power losses $P_{Loss}$. Since the maximum available braking torque has been determined for a given set of operating conditions, this value can be communicated to other functionality of the vehicle such that the requested braking torque $T_r$ does not exceed the available torque $T_{Max}$, for the given set of operating conditions. Furthermore, a requested power dissipation $P_{D,r}$ is limited by the maximum available power dissipation $P_{D,Max} = P_{D,EM} + P_{Loss}$.

Moreover, the maximum available braking torque $T_{Max}$ may be determined for a wide range of operating conditions such that a torque map is created, for example in the form of a lookup table, thereby eliminating the need to recalculate the available torques, and also increasing the responsiveness and speed of the system since no online calculations need to be performed to determine the available torque values. The different operating conditions to take into consideration may for example comprise the stator winding temperature, the DC voltage to the inverter, the speed of the electrical machine and the output torque from the electrical machine. Furthermore, the maximum available braking torque $T_{Max}$ values for different operating conditions may be determined analytically or empirically.

Next, it is determined 114 if the requested braking torque $T_r$ is equal to or lower than the torque required for providing a power corresponding to the sum of the maximum power that the battery can receive $P_{B,Max}$ and the total power losses $P_{Loss}$. If that is the case, the requested braking torque $T_r$ is provided by providing 116 power to the battery corresponding to the difference between the requested braking torque and the total normal power losses, i.e. $P_B = P(T_r) - P_{Loss}$.

On the other hand, if it is determined 114 that the requested braking torque exceeds the torque required for providing a power corresponding to the sum of the maximum power that the battery can receive and the total normal power losses, a stator current Is of the electrical machine that will dissipate the additional power $P_{IS}$ needed while achieving the required braking torque is determined 118, i.e. $P_{IS} \sim T_r - (T(P_{B,Max}) + T(P_{Loss}))$.

If there is a request is for dissipation of additional power, $P_{D,r}$, the method comprises determining 120 a stator current $I_S$ corresponding to the difference between the requested power dissipation $P_{D,r}$ and the total normal power losses, $P_{Loss}$.

The step of determining 108 the stator current, $I_{S,Max}$, providing the maximum achievable power dissipation $P_{D,Max}$ in the electrical drive system may comprise determining both the electrical machine losses in themselves as well as the inverter losses, since inverter losses are inherent in the electrical machine, and since the inverter losses also depend on the amplitude of the current provided to the electrical machine.

Fig. 3 is a diagram showing a vector representation of the stator current vector $I_S$ for the electrical machine 208. The stator current is represented by the d-and q-axis phase currents in a dq-reference frame, where the stator current is limited by a maximum current line to prevent damage to the electrical machine. In a normal operating mode where no additional power dissipation is required in the electrical machine, the stator current is determined as a maximum torque per ampere (MTPA) current, $I_{S1}$, providing maximum efficiency. To increase the possible power dissipation in the electrical machine, the stator current is recalculated. The stator current $I_{S2}$ is illustrated as being located along a constant torque line with respect to $I_{S1}$, i.e. $I_{S2}$ provides the same output torque but with a decreased efficiency.

For machine speed-and torque-levels covering the entire operating range, the d-axis and q-axis current resulting in the highest achievable stator current (MAPT-Maximum Ampere Per Torque) and resistive losses in the electric machine stator is calculated, where the considered resistive losses $P_{cu}$ are defined by

$$P_{cu} = R_S \sqrt{i_d^2 + i_q^2}$$

where $R_s$ is the stator winding resistance. The current $i_d$ is limited to ensure that permanent demagnetization does not occur.

The additional losses $P_{add}$ made possible by modifying the stator current $I_{S1}$ can be approximately estimated by the increased resistive losses and determined as

$$P_{add} = \frac{3}{2} R_S \left( I_{S2}^2 - I_{S1}^2 \right)$$

In one embodiment of the invention, the requested braking torque is utilized to perform gear synchronization. In particular, the requested braking torque is a torque required to reduce the speed of the second axle 204b of the gear box 202 in order to facilitate a shift to a higher gear.

Even though the invention has been described with reference to specific exemplifying embodiments thereof, many different alterations, modifications and the like will become apparent for those skilled in the art. Also, it should be noted that parts of the method and system may be omitted, interchanged or arranged in various ways, the method and system yet being able to perform the functionality of the present invention.

Additionally, variations to the disclosed embodiments can be understood and effected by the skilled person in practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A method for controlling power dissipation in an electric drive system for a hybrid electrical vehicle, the control system comprising:

   a gear set or a gear box (202);
   an electrical machine (208) connected to an axle of the gear set or gear box;
   a rechargeable battery (211) operatively connected to the electrical machine; and
   a control unit (214) configured to control the gear box and the electrical machine; wherein the method comprises the steps of:

      determining (102) a maximum available braking torque of the electrical machine for a given set of operating conditions based on:

         - a maximum power that the battery can receive (104); and
         - total normal power losses in the electric drive system (106);
         - determining (108) the stator current providing a maximum achievable power dissipation in the electrical drive system for a certain shaft torque value;

      receiving (110) a requested braking torque for the electrical machine, lower than or equal to the maximum available braking torque, or receiving (112) a requested power dissipation lower than or equal to a maximum achievable power dissipation in the electrical drive system;
      if the requested braking torque is equal to or lower than the torque required for providing a power corresponding to the sum of the maximum power that the battery can receive and the total power losses, providing the requested braking torque by providing (116) power to the battery corresponding to the difference between the requested braking torque and the total normal power losses; and
      if the requested braking torque exceeds the torque required for providing a power corresponding to the sum of the maximum power that the battery can receive and the total normal power losses, determining (118) a stator current of the electrical machine that will dissipate the additional power needed while achieving the required braking torque; and

if a power dissipation is requested, determining (120) a stator current resulting in the requested power dissipation.

2. The method according to claim 1, wherein determining the stator current providing the maximum achievable power dissipation in the electrical drive system comprises determining electrical machine losses and inverter losses

3. The method according to any one of the preceding claims, wherein determining a stator current vector of the electrical machine that will dissipate the additional power needed while achieving the required braking torque comprises modifying a maximum torque per ampere, MTPA, stator current along a constant torque line.

4. The method according to any one of the preceding claims, further comprising determining a plurality of maximum available braking torques of the electrical machine for a range of different operating conditions, and storing the plurality of available braking torques.

5. The method according to any one of the preceding claims, wherein the operating conditions comprises stator winding temperature, DC voltage to the inverter, speed of the electrical machine and output torque from the electrical machine.

6. The method according to any one of the preceding claims, wherein the total normal power losses in the electric drive system comprises losses from the electrical machine and from power consuming units of the vehicle.

7. The method according to any one of the preceding claims, wherein the requested braking torque is utilized to perform gear synchronization.

8. The method according to claim 7, wherein the requested braking torque is a torque required to reduce the speed of the axle of the gear box in order to facilitate a shift to a higher gear.

9. The method according to any one of the preceding claims, wherein the requested braking torque is utilized to increase a torque window for performing electrical braking of the vehicle.

10. The method according to any one of the preceding claims, wherein the requested power dissipation is used to selectively control additional heating in the electrical machine and/or in the inverter.

11. A control system for controlling power dissipation in an electric drive system for a hybrid electrical vehicle comprising:

a gear set or a gear box (202);
an electrical machine (208) connected to an axle of the gear se or gear box; and a rechargeable battery (211) operatively connected to the electrical machine via an inverter, the control system comprising;
a control unit (214) configured to control the gear box and the electrical machine; wherein the control unit is configured to:

determine a maximum available braking torque of the electrical machine for a given set of operating conditions based on:

- a maximum power that the battery can receive; and
- total normal power losses in the electric drive system;
- determine the stator current providing the maximum achievable power dissipation in the electrical drive system for a certain shaft torque value;

receive a requested braking torque for the electrical machine, lower than or equal to the maximum available braking torque, or receiving a requested power dissipation lower than or equal to the maximum achievable power dissipation;
if a requested braking torque is equal to or lower than the torque required for providing a power corresponding to the sum of the maximum power that the battery can receive and the total power losses, provide the requested braking torque by providing power to the battery corresponding to the difference between the requested braking torque and the total normal power losses; and
if the required braking torque exceeds the torque required for providing a power corresponding to the sum of the maximum power that the battery can receive and the total normal power losses, determine a stator current of the electrical machine that will dissipate the additional power needed while still achieving the required braking torque; and
if a power dissipation is requested, determine a stator current resulting in the requested power dissipation.

**12.** The control system according to claim 11, wherein the gear box is a dual clutch transmission gear box, wherein the electrical machine is operatively connected to an axle of one of the two clutches.

**13.** The control system according to claim 11 or 12, wherein the control unit is further configured to determine the stator current providing the maximum achievable power dissipation in the electrical drive system by determining electrical machine losses and inverter losses

**14.** The control system according to any one of claims 11 to 13, wherein the control unit is further configured to determine a stator current of the electrical machine that will dissipate the additional power needed while achieving the required braking torque by modifying a maximum torque per ampere, MTPA, stator current along a constant torque line.

**15.** The control system according to any one of claims 11 to 14, wherein the control unit is further configured to determine a plurality of maximum available braking torques of the electrical machine for a range of different operating conditions, and to store the plurality of available braking torques.

*102*

Determine maximum available braking torque, $T_{max}$

*104* — Maximum power battery can receive, $P_{B,Max}$

*106* — Normal power losses $P_{Loss}$

Determine stator current providing max power dissipation, $I_{S,Max}$ — *108*

Receive requested braking torque, $T_r$

*110*

*112* — Receive requested power dissipation, $P_{D,r}$

Determine $I_S$ to dissipate power corresponding to $P_{IS} = P_{D,r} - P_{Loss}$ — *120*

*114*

$T_r \leq (T(P_{B,Max}) + T(P_{Loss}))$

Yes

No

Provide power to battery, $P_B = P(T_r) - P_{Loss}$ — *116*

Determine IS to dissipate power corresponding to $P_{IS} \sim T_r - (T(P_{B,Max}) + T(P_{Loss}))$ — *118*

*Fig. 1*

Fig. 2

Fig. 3

**EP 3 266 643 A1**

Europäisches
Patentamt

European
Patent Office

Office européen
des brevets

# EUROPEAN SEARCH REPORT

Application Number

EP 16 17 8247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 024573 A1 (DAIMLER AG [DE]) 18 June 2014 (2014-06-18) | 1-3,5,6, 9-11,13, 14 | INV. B60L7/22 B60L11/18 |
| Y | * paragraphs [0001], [0024], [0029] - [0036], [0045] - [0049]; figures 1-6 * ----- | 4,7,8, 12,15 | |
| Y,D | US 8 880 259 B2 (CHENG BING [US] ET AL) 4 November 2014 (2014-11-04) * column 2, line 57 - column 5, line 13; figures 1-4 * ----- | 1-15 | |
| Y | US 6 121 740 A (GALE ALLAN ROY [US] ET AL) 19 September 2000 (2000-09-19) * column 2, line 23 - column 6, line 14; figures 1-3 * ----- | 1-15 | |
| Y | US 2015/072830 A1 (SAKATA KUNIO [JP]) 12 March 2015 (2015-03-12) * paragraphs [0028] - [0039]; figure 1 * ----- | 7,8,12 | |

TECHNICAL FIELDS SEARCHED (IPC)

B60L

The present search report has been drawn up for all claims

| Place of search | Date of completion of the search | Examiner |
|---|---|---|
| The Hague | 21 December 2016 | Albertsson, Gustav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 8247

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2016

| Patent document cited in search report | Publication date | Patent family member(s) | Publication date |
|---|---|---|---|
| DE 102012024573 A1 | 18-06-2014 | NONE | |
| US 8880259 B2 | 04-11-2014 | CN 104159774 A<br>EP 2790955 A2<br>US 2013151050 A1<br>WO 2013090021 A2 | 19-11-2014<br>22-10-2014<br>13-06-2013<br>20-06-2013 |
| US 6121740 A | 19-09-2000 | NONE | |
| US 2015072830 A1 | 12-03-2015 | CN 104203683 A<br>DE 112013001867 T5<br>JP 5988653 B2<br>JP 2013212767 A<br>US 2015072830 A1<br>WO 2013150964 A1 | 10-12-2014<br>22-01-2015<br>07-09-2016<br>17-10-2013<br>12-03-2015<br>10-10-2013 |

EPO FORM P0459

For more details about this annex : see Official Journal of the European Patent Office, No. 12/82

**EP 3 266 643 A1**

**Patent documents cited in the description**

- US 8880259 B